# EUROPEAN PATENT APPLICATION

(11) **EP 4 660 169 A1**
(43) Date of publication of application: **10.12.2025**
(21) Application number: 24180583.7
(22) Date of filing: 06.06.2024
(51) Int. Cl.: C04B 28/02, C04B 40/00

(54) **ADMIXTURE TO IMPROVE THE RHEOLOGY OF MINERAL BINDER COMPOSITIONS AND MINERAL BINDER COMPOSITIONS COMPRISING THE SAME**

(71) Applicant: Sika Technology AG, 6340 Baar (CH)
(72) Inventor: CHAPELAT, Julien, 2502 Bienne (CH); GALLUCCI, Emmanuel, 8048 Zürich (CH); JUILLAND, Patrick, 3005 Bern (CH); SZABO, Anna, 8006 Zürich (CH)
(74) Representative: Sika Patent Attorneys

(57) **Abstract**

The present invention relates to an admixture for mineral binder compositions and mineral binder compositions comprising the same. The admixture comprises at least one phosphonate group carrying polymer and at least one polyalkoxylated amide or ester of sugar acid and is suitable to improve the rheological properties of mineral binder compositions.

## Description

### Technical Field

The present invention relates to an admixture for mineral binder compositions and mineral binder compositions comprising the same. The admixture comprises at least one phosphonate group carrying polymer and at least one polyalkoxylated amide or ester of sugar acid and is suitable to improve the rheological properties of mineral binder compositions.

### Background of the invention

Dispersing agents are used in the construction industry as plasticizers or water-reducing agents for mineral binder compositions, such as concrete, mortar, cements, gypsum, and lime. Organic polymers are generally used as dispersing agents, which are added together with the mixing water, or which are added as a solid to the mineral binder composition. As a result, both, the consistency during processing and the properties in the hardened state can be advantageously modified. The choice and dosage of a suitable dispersing agent depends in particular on the specific mineral binder composition, the processing technique, and/or the intended use of the mineral binder composition.

In practice, superplasticizers in the form of polycarboxylate ethers (PCE) are often used as dispersing agents for mineral binder compositions, for example to improve the flow properties. Although PCEs exhibit a strong water reduction and reduce the yield point of mineral binder compositions, they have little or no effect on viscosity.

Various phosphonated molecules have been employed as cement dispersants and were shown to reduce the viscosity of mineral binder compositions. For example, EP 0 444 542 A1 (BASF) teaches to use polyethyleneimine phosphonates and EP 0 663 892 A1 (Chryso) teaches to use polyalkoxylated amines with phosphonate groups.

However, it is known from EP 2 406 199 A1 (Chryso) that a combination of a polyalkoxylated amine with phosphonate groups, a superplasticizer, and an accelerator is necessary to achieve a good compromise between workability and strength development. If one constituent is missing at least one of workability or strength development is compromised. It is therefore a disadvantage of polyalkoxylated amines with phosphonate groups to have a retarding effect on mineral binder compositions.

A combination of several constituents in one admixture is often difficult and, especially in the case of one-component admixtures, may lead to problems with stability and shelf-life. On the other hand, if the constituents are arranged in spatially separated components, for example as a two-component admixture, problems with dosage accuracy may arise. The use if accelerators in admixtures, in particular, can lead to very high set and cure rates, for example if the admixture is used at elevated temperatures such as during summer.

It is therefore desirable to provide admixtures that can improve the rheological properties, in particular reduce the viscosity, of mineral binder compositions but do not require additional accelerators to counter any retardation. Also it is generally desirable to provide admixtures that are more efficient, i.e. that bring about the desired effects at lower dosages.

### Summary of the invention

It is an object of the present invention to provide improved admixtures for mineral binder compositions that can improve the rheological properties, in particular reduce the viscosity, of mineral binder compositions. It is another object of the present invention to provide mineral binder compositions having improved rheological properties, especially reduced viscosity. In particular, the admixtures should be stable over time and require no additional accelerator.

It has been found that the combined use of at least one phosphonate group carrying polymer and at least one polyalkoxylated amide or ester of sugar acid acts synergistically to improve the rheological properties, in particular reduce the viscosity, of mineral binder compositions.

The objective of the present invention is therefore solved by the subject matter of claim 1.

Further aspects of the present invention are the subject-matter of independent claims. Preferred embodiments are the subject matter of dependent claims.

### Detailed Ways

In a first aspect the present invention relates to an admixture for mineral binder composition, said admixture comprising
(i) at least one phosphonate group carrying polymer of general structure (I) 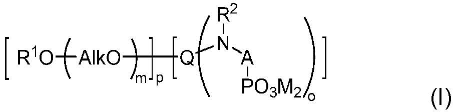 wherein in general structure (I)
   R¹ is a hydrogen atom or a monovalent hydrocarbon group having from 1-18 carbon atoms and optionally one or more heteroatoms,
   R² independently of one another is A-PO₃M₂, a monovalent hydrocarbon group having from 1 - 18 carbon atoms and optionally one or more heteroatoms, a group
   [R¹-O-(AlkO-)ₘ]ₚ-Q, or a group 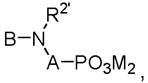
   Q is an alkylene group having from 2 - 18 carbon atoms and optionally one or more heteroatoms,
   A is an alkylene group having 1 - 5 carbon atoms,
   B is an alkylene group having from 2-18 carbon atoms and optionally one or more heteroatoms,
   R^{2'} having the same meaning as R²,
   M independently of one another is H, an alkali metal, or an organic ammonium cation,
   Alk independently of one another is a group CₙH₂ₙ where n is 1, 2, 3, or 4,
   m is an integer between 1 and 100,
   o is an integer between 1 and 3,
   p is an integer between 1 and 10,
   or of general structure (II) 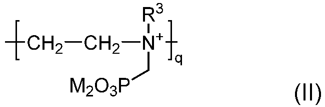
   Wherein in general structure (II)
   R³ independently of one another are H, an alkyl group having 1 - 5 carbon atoms, or -O-,
   M independently of one another is H, an alkali metal, or an organic ammonium cation,
   q is 10 or more, and
(ii) at least one polyalkoxylated amide or ester of sugar acid of general structure (III) 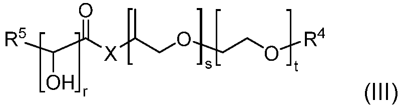 or of general structure (IV) 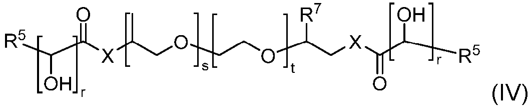 wherein in general structures (III) and (IV)
   X is O or NH,
   R⁴ is a hydrogen atom or a monovalent hydrocarbon group having from 1-18 carbon atoms
   R⁵ is CH₂-OH, C(O)H, C(O)OH, or C(O)-R⁶, where R⁶ is 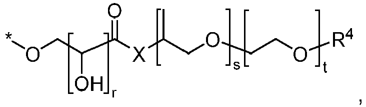
   the * indicating the point of connection to the carbonyl C atom,
   R⁷ is H or CH₃,
   r is an integer between 1 and 4,
   s and t independently of one another are integers between 0 and 350 with the provision that s + t is not zero.

It is to be understood that ethylene oxide and propylene oxide groups in general structures (III) and (IV) can be arranged randomly, in two or more blocks, or with a gradient structure.

It has in particular be found that where X is NH, the first alkylene oxide group should be a propylene oxide group. Therefore, if X is NH, R⁷ preferably is CH₃.

A mineral binder composition of the present invention is a composition comprising at least one mineral binder, preferably at least one cementitious binder. A mineral binder composition of the present invention may also consist of a mineral binder or of a mix of two or more different mineral binders. A mineral binder composition may additionally comprise aggregates, fillers, additives different from the admixture of the present invention, and/or water. A mineral binder composition reacts with water to from solid hydrates in a reaction called hydration. Thus, curing of a mineral binder composition starts when mixing water is added. Especially, a mineral binder composition of the present invention is a cementitious binder, a mortar, or concrete.

Preferably, a mineral binder within the present context is a cementitious binder that reacts with water to form solid hydrates. A cementitious binder in particular is selected from cements, especially from Portland cements according to standard EN 197-1, calcium aluminate cements, especially according to standard EN 14647, calcium sulfoaluminate cements, lime, pozzolanes, and latent hydraulic materials. Mixtures of two or more cementitious binders are possible and sometimes preferred.

The term "lime" is meant to encompass natural hydraulic lime, formulated lime, hydraulic lime, and air lime as described in the standard EN 459-1:2015. Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolanes such as pumice or trass. A cementitious binder may additionally comprise calcium sulfate, in particular calcium sulfate anhydrite, calcium sulfate α- and β- hemihydrate, calcium sulfate dihydrate, naturally occurring gypsum, as well as gypsum from industrial processes such as FGD gypsum or phosphogypsum.

Aggregates can be any material that is non-reactive in the hydration reaction of mineral binders. Aggregates can be any aggregate typically used for construction materials. Typical aggregates are for example rock, crushed stone, crushed concrete, gravel, sand, especially quartz sand, river sand and/or manufactured sand, glass, expanded glass, hollow glass beads, glass ceramics, quarry wastes, porcelain, electro fused or sintered abrasives, firing support, silica xerogels, bio sourced aggregates such as hemp or sunflower.

Fillers are characterized by a small particle size, in particular a particle size of below 0.063 mm. Especially, fillers are selected from fine calcium carbonate, ground limestone, ground dolomite, ground aluminum oxide, and/or non-reactive slags. Non-reactive means that slags useful as fillers do not react with water in hydration reactions.

Additives include retarders, accelerators, air detraining agents, air entraining agents, shrinkage reducing admixtures, superplasticizers, thickening agents, foaming agents, defoamers, water retention agents, damp proofing agents, pumping aids, biocides, corrosion inhibitors, and pigments. According to some embodiments, one or more of these additives can be comprised in an admixture of the present invention. According to embodiments, the admixture of the present invention additionally comprises at least one of retarders, accelerators, air detraining agents, air entraining agents, shrinkage reducing admixtures, superplasticizers, thickening agents, foaming agents, defoamers, water retention agents, damp proofing agents, pumping aids, biocides, corrosion inhibitors, pigments, and water. Superplasticizers are chemically different from the phosphonate group carrying polymer and from the polyalkoxylated amide or ester of sugar acid of the present invention. In particular, superplasticizers are polycarboxylate ethers.

A mineral binder composition of the present invention can be a dry mineral binder composition or a wet mineral binder composition. A dry mineral binder composition is essentially free of water, preferably water present is less than 10 w%, more preferably less than 1 w% relative to the mineral binder. In a wet mineral binder composition water is present. In particular, in a wet mineral binder composition, water is present in an amount to yield a weight ratio of water to mineral binder between 0.2 - 0.6, preferably 0.25 - 0.4.

An admixture of the present invention may be provided as a mono-component admixture or as a multi-component, especially a two-component admixture.

A mono-component admixture contains all constituents of the admixture in one container. This has the advantage that a lower number of containers has to be foreseen at the site of mixing a mineral binder composition and that no mistakes with relative dosages of constituents can occur.

A multi-component admixture contains the constituents of the admixture in multiple, preferably in two, spatially separated containers. A multi-component, especially two-component, admixture has the advantage that a ratio of individual components, and thereby constituents, may be easily adjusted according to specific requirements.

In particular, in general structure (I), Alk is alkylene such as methylene, ethylene, propylene, and/or butylene. It is in particular possible that two or more alkylene groups with different number of C atoms are present. For example, it is possible that the repeating units -AlkO- are a mixture of ethylene oxide groups and propylene oxide groups which can be arranged statistically or block wise.

It is likewise possible in general structure (I) that the Q, N, and R² form one or more rings which may contain one or more further heteroatoms.

Particularly preferred are phosphonate group carrying polymers of general structure (I) that are water soluble. For example phosphonate group carrying polymers carrying at least one amino-di-(alkylene phosphonic) group and at least one polyalkoxylated chain.

According to preferred embodiments, in an admixture of the present invention a phosphonate group carrying polymer of general structure (I) is comprised, wherein R¹ is methyl, R² is A-PO₃M₂, A is methylene, Q is ethylene, o is 1, Alk is CₙH₂ₙ where n is 2 and/or 3, m is an integer between 30 and 50, and p is 1.

A preferred phosphonate group carrying polymers of general structure (I) is for example a polymer of the following structure (Ia) 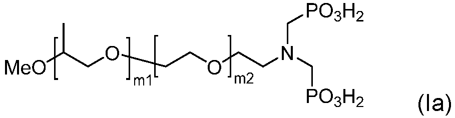 wherein in structure (Ia)
m1 and m2 independently of one another are between 0 - 50, preferably between 1 - 49, with the provision that the sum m1+m2 cannot be 0.

In general structure (II), in case where R³ is -O⁻, the polymer is electro neutral. In general structure (II), in case where R³ is H or an alkyl group having 1 - 5 carbon atoms, electro neutrality is reached by the presence of additional anions. Suitable anions are for example halogenides, especially chloride, hydroxides, carbonates or bicarbonates, carboxylates, especially formiate or acetate, and sulfates.

No stereochemistry is shown in the general structures (III) and (IV). This means that general structures (III) and (IV) encompass all possible stereochemical forms such as enantiomers, diastereomers, and racemates.

In the general structures (III) and (IV) "X" can be an oxygen atom O, thereby leading to an ester of sugar acid. Likewise, in the general structures (III) and (IV) "X" can be a nitrogen group NH, thereby leading to an amide of sugar acid.

The polyalkoxylated amide or ester of sugar acid of general structures (III) and (IV) can be derived from aldonic acids, uronic acids, or aldaric acids. In case the polyalkoxylated amide or ester of sugar acid of general structures (III) or (IV) is derived from aldonic acids R⁵ is CH₂-OH. In case the polyalkoxylated amide or ester of sugar acid of general structures (III) or (IV) is derived from uronic acids R⁵ is C(O)H. In case the polyalkoxylated amide or ester of sugar acid of general structures (III) or (IV) is derived from aldaric acids R⁵ can be a carboxylate grouping C(O)OH or can be a carboxylate ester grouping C(O)-R⁶ where R⁶ is a group 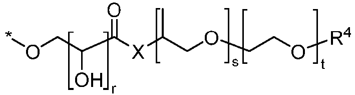 (the * indicating the point of connection to the carbonyl C).

According to preferred embodiments, "r" in general structures (III) and (IV) is 4. Very preferably, the polyalkoxylated amide or ester of sugar acid of general structures (III) and (IV) is derived from gluconic acid.

Polyalkoxylated amide or ester of sugar acid of general structures (III) and (IV) can be prepared by reacting a sugar acid with a suitable alcohol or amide. Such reactions are for example described in the examples of WO2018/077772 A2 (BASF).

According to preferred embodiments, in the general structure (III) or (IV) X is NH, R⁴ is methyl, R⁵ is CH₂-OH, r is 4, and s and t independently of one another are integers between 0 and 350, preferably between 0 and 180, more preferably between 0 and 70 with the provision that s + t is not zero.

The provision that s + t cannot be zero means that at least one of propylene oxide group or ethylene oxide group must be present. Propylene oxide groups or ethylene oxide groups can be arranged randomly, in two or more blocks, or with a gradient. If arranged block wise it is preferred that there is at least one block consisting of propylene oxide units and at least one block consisting of propylene oxide units. According to embodiments, in general structures (III) and (IV) there is a first block consisting of propylene oxide units, a second block consisting of ethylene oxide units, and a third block consisting of propylene oxide units.

It has been found that where X is NH, advantageously the first alkylene oxide group is a propylene group. Therefore, in general structure (III), where X is NH, advantageously there is a first block of propylene oxide units followed by a second block of ethylene oxide units. In general structure (IV), where X is NH, advantageously there is a first block of propylene oxide units followed by a second block of ethylene oxide units, followed by a third block of propylene oxide units.

According to embodiments, at least one polyalkoxylated amide of sugar acid of general structure (III) is comprised in an admixture of the present invention, wherein in the general structure (III) X is NH, R⁴ is CH₃, R⁵ is CH₂-OH, r is 4, and s and t independently of one another are integers between 0 and 350, preferably between 0 and 180, more preferably between 0 and 70 with the provision that s + t is not zero.

According to embodiments, at least one polyalkoxylated amide of sugar acid of general structure (IV) is comprised in an admixture of the present invention, wherein in the general structure (IV) X is NH, R⁵ is CH₂-OH, R⁷ is CH₃, r is 4, and s and t independently of one another are integers between 0 and 350, preferably between 0 and 180, more preferably between 0 and 70 with the provision that s + t is not zero.

Particularly preferred polyalkoxylated amides of the present invention are of the general structure (Illa) 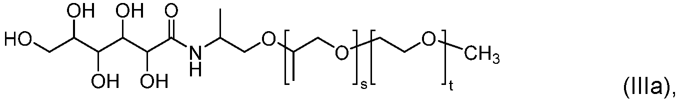 wherein s and t independently of one another are integers between 0 and 350, preferably between 0 and 180, more preferably between 0 and 70 with the provision that s + t is not zero.

Other particularly preferred polyalkoxylated amides of the present invention are of the general structure (IVa) 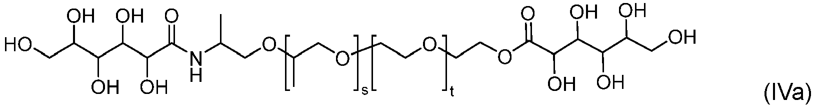 wherein s and t independently of one another are integers between 0 and 350, preferably between 0 and 180, more preferably between 0 and 70 with the provision that s + t is not zero.

Other particularly preferred polyalkoxylated amides of the present invention are of the general structure (IVb) 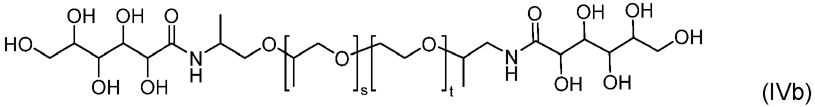 wherein s and t independently of one another are integers between 0 and 350, preferably between 0 and 180, more preferably between 0 and 70 with the provision that s + t is not zero.

Other particularly preferred polyalkoxylated esters of the present invention are of the general structure (IVc) 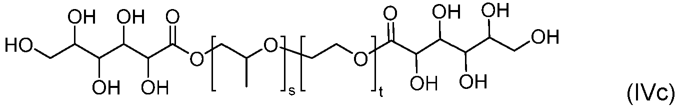 wherein s and t independently of one another are integers between 0 and 350, preferably between 0 and 180, more preferably between 0 and 70 with the provision that s + t is not zero.

It is possible, in general structures (III), (IV), (Illa), (IVa), (IVb), and (IVc) that s > t. It is likewise possible that s < t.

The molecular weight of a compound of general structure (III) or (IV) can be determined by gel permeation chromatography (GPC). It is also possible to determine the molecular weight by nuclear magnetic resonance (NMR) spectroscopy.

In an admixture of the present invention, a weight ratio of the phosphonate group carrying polymer to the polyalkoxylated amide or ester of sugar acid preferably is between 20:1 to 1:20, preferably 10:1 to 1:10, more preferably 10:1 to 1:1, in particular 3:1.

In another aspect the present invention relates to the use of an admixture as described above to improve the rheological properties, in particular to reduce the viscosity, of a wet mineral binder composition.

All features and embodiments as described above also apply to this aspect.

A mineral binder composition is a wet mineral binder composition. This means that an amount of water is present in the mineral binder composition. In particular, water is present in an amount to yield a weight ratio of water to mineral binder between 0.2 - 0.6, preferably 0.25 - 0.4.

The expression "improve the rheological properties" within the present context means that at least one rheological property of the wet mineral binder composition is improved when an admixture of the present invention is used, as compared to the same wet mineral binder composition without admixture of the present invention. An improvement of rheological properties can be one or more of the following:
▪ an increase in slump, measurable according to standard DIN EN 12350-2:2019-09
▪ an increase in slump flow, measurable according to standard DIN EN 12350-5:2019-09
▪ a reduction in flow time, measurable according to standard DIN EN 12350-9:2010-12
▪ a reduction in flow down time, measurable according to standard JSCE-F 541-1999
▪ a reduction in viscosity,
▪ a reduction in yield stress.

Viscosity and yield stress can be measured according to the following protocol. Pastes are prepared by mixing mineral binder, in particular cement, and water in a weight ratio of water to binder of 0.35. An admixture of the present invention is optionally added together with the mixing water in the desired amount. The paste is mixed for 2mins with a Heidolph mixer. After mixing the paste is transferred immediately to the container of the Anton Paar MCR 301 rheometer (D = 24 mm, H = 52 mm) and is measured with a helical impeller (d = 20 mm, h = 12 mm). The measuring protocol consists of 20s pre-shear at 100s⁻¹ shear rate followed by a logarithmic downwards ramp with 21 steps from 100s⁻¹ to 0.1s⁻¹ where the shear stress is recorded for each step. The time it takes to get a stabile response for each specific shear rate is increasing with the decrease of shear rate, thus the length of steps are 5s to 20s with a logarithmic increase. The data evaluation is based on the Bingham model according to which the shear stress is linearly scaling with the shear rate above the yield stress. This model does not account for the thixotropic behavior of the paste, thus 10 points were used for the linear regression in the high shear rate regime (4.47-70.8 s⁻¹). The intercept is the Bingham yield stress and the slope is the Bingham viscosity.

The use can in particular comprise the addition of an admixture of the present invention to a dry mineral binder composition and/or wet mineral binder composition. In particular, an admixture of the present invention can be added together with the mixing water.

The combined use of a phosphonate group carrying polymer of general structure (I) or (II), and of a polyalkoxylated amide or ester of sugar acid of general structure (III) or (IV) has a synergistic effect.

In another aspect the present invention relates to a mineral binder composition comprising at least one mineral binder and comprising an admixture as described above.

All features and embodiments as described above also apply to this aspect.

Preferably, the mineral binder is selected from cement, pozzolanic material, and/or latent hydraulic material.

According to preferred embodiments, the mineral binder composition comprises a phosphonate group carrying polymer of general structure (I) or (II) in an amount of 0.005 - 5 w%, preferably 0.01 - 2 w%, more preferably 0.1 - 1.2 w%, relative to the total dry weight of mineral binder.

According to preferred embodiments, the mineral binder composition comprises a polyalkoxylated amide or ester of sugar acid of general structure (III) or (IV) in an amount of 0.0001 - 5 w%, preferably 0.001 - 1 w%, more preferably 0.01 - 0.5 w%, relative to the total dry weight of mineral binder.

In particular the mineral binder composition comprises cement, 0.005 - 5 w%, relative to cement, of a phosphonate group carrying polymer of general structure (I) or (II), and 0.0001 - 5 w%, relative to cement, of a polyalkoxylated amide or ester of sugar acid of general structure (III) or (IV).

In particular the mineral binder composition comprises pozzolane, 0.005 - 5 w%, relative to pozzolane, of a phosphonate group carrying polymer of general structure (I) or (II), and 0.0001 - 5 w%, relative to pozzolane, of a polyalkoxylated amide or ester of sugar acid of general structure (III) or (IV).

In particular the mineral binder composition comprises latent hydraulic material, 0.005 - 5 w%, relative to latent hydraulic material, of a phosphonate group carrying polymer of general structure (I) or (II), and 0.0001 - 5 w%, relative to latent hydraulic material, of a polyalkoxylated amide or ester of sugar acid of general structure (III) or (IV).

In particular the mineral binder composition comprises cement, 0.01 - 2.0 w%, relative to cement, of a phosphonate group carrying polymer of general structure (I) or (II), and 0.001 - 1 w%, relative to cement, of a polyalkoxylated amide or ester of sugar acid of general structure (III) or (IV).

In particular the mineral binder composition comprises pozzolane, 0.01 - 2.0 w%, relative to pozzolane, of a phosphonate group carrying polymer of general structure (I) or (II), and 0.001 - 1 w%, relative to pozzolane, of a polyalkoxylated amide or ester of sugar acid of general structure (III) or (IV).

In particular the mineral binder composition comprises latent hydraulic material, 0.01 - 2.0 w%, relative to latent hydraulic material, of a phosphonate group carrying polymer of general structure (I) or (II), and 0.001 - 1 w%, relative to latent hydraulic material, of a polyalkoxylated amide or ester of sugar acid of general structure (III) or (IV).

In particular the mineral binder composition comprises cement, 0.1 - 1.2 w%, relative to cement, of a phosphonate group carrying polymer of general structure (I) or (II), and 0.01 - 0.5 w%, relative to cement, of a polyalkoxylated amide or ester of sugar acid of general structure (III) or (IV).

In particular the mineral binder composition comprises pozzolane, 0.1 - 1.2 w%, relative to pozzolane, of a phosphonate group carrying polymer of general structure (I) or (II), and 0.01 - 0.5 w%, relative to pozzolane, of a polyalkoxylated amide or ester of sugar acid of general structure (III) or (IV).

In particular the mineral binder composition comprises latent hydraulic material, 0.1 - 1.2 w%, relative to latent hydraulic material, of a phosphonate group carrying polymer of general structure (I) or (II), and 0.01 - 0.5 w%, relative to latent hydraulic material, of a polyalkoxylated amide or ester of sugar acid of general structure (III) or (IV).

In another aspect, the present invention relates to a method to improve the effectiveness of a phosphonate group carrying polymer of general structure (I) 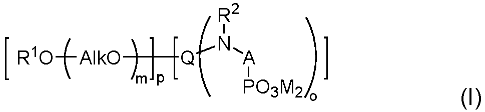 wherein in general structure (I)
R¹ is a hydrogen atom or a monovalent hydrocarbon group having from 1-18 carbon atoms and optionally one or more heteroatoms,
R² independently of one another is A-PO₃M₂, a monovalent hydrocarbon group having from 1-18 carbon atoms and optionally one or more heteroatoms, a group [R¹-O-(AlkO-)ₘ]ₚ-Q, or a group 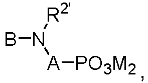
Q is an alkylene group having from 2 - 18 carbon atoms and optionally one or more heteroatoms,
A is an alkylene group having 1 - 5 carbon atoms,
B is an alkylene group having from 2 - 18 carbon atoms and optionally one or more heteroatoms,
R^{2'} having the same meaning as R²,
M independently of one another is H, an alkali metal, or an organic ammonium cation,
Alk independently of one another is a group CₙH₂ₙ where n is 1, 2, 3, or 4,
m is an integer between 1 and 100,
   o is an integer between 1 and 3,
   p is an integer between 1 and 10,
or of general structure (II) 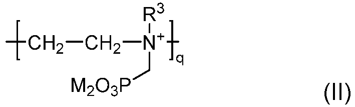
wherein in general structure (II)
R³ independently of one another are H, an alkyl group having 1 - 5 carbon atoms, or -O⁻ ,
M independently of one another is H, an alkali metal, or an organic ammonium cation,
q is 10 or more,

in a mineral binder composition, said method comprising a step of adding a polyalkoxylated amide or ester of sugar acid of general structure (III) 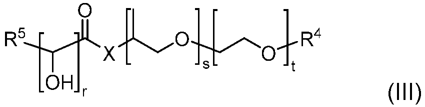 or of general structure (IV) 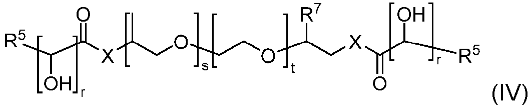 wherein in general structures (III) and (IV)
X is O or NH,
R⁴ is a hydrogen atom or a monovalent hydrocarbon group having from 1 - 18 carbon atoms
R⁵ is CH₂-OH, C(O)H, C(O)OH, or C(O)-R⁶, where R⁶ is 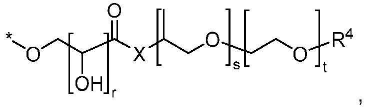
the * indicating the point of connection to the carbonyl C atom,
R⁷ is H or CH₃,
r is an integer between 1 and 4,
s and t independently of one another are integers between 0 and 350 with the provision that s + t is not zero,
to the mineral binder composition together with or separate from the phosphonate group carrying polymer.

All features and embodiments as described above also apply to this aspect.

The expression "improve the effectiveness" means that the effect of a phosphonate group carrying polymer of general structure (I) or (II) on a mineral binder composition is increased by a polyalkoxylated amide or ester of sugar acid of general structure (III) or (IV).

In particular, phosphonate group carrying polymer of general structure (I) or (II) are known to increase the slump flow, to reduce the viscosity, and/or to reduce the yield point of a wet mineral binder composition. Any of these effects can be increased by the additional use of a polyalkoxylated amide or ester of sugar acid of general structure (III) or (IV). In other words, a combination of at least one phosphonate group carrying polymer of general structure (I) or (II), and of at least one polyalkoxylated amide or ester of sugar acid of general structure (III) or (IV) leads to increased slump flow, to reduced viscosity, and/or to reduced yield point of a wet mineral binder composition as compared to the same wet mineral binder composition only comprising the at least one phosphonate group carrying polymer of general structure (I) or (II).

The additional use of at least one polyalkoxylated amide or ester of sugar acid of general structure (III) or (IV) makes it is possible to reduce the dosage of the at least one phosphonate group carrying polymer of general structure (I) or (II) relative to mineral binder and at the same time still improve or at least keep on the same level any of slump flow, viscosity, and/or yield point.

It has been found that the dosage, relative to mineral binder, of the sum of phosphonate group carrying polymer and of polyalkoxylated amide or ester of sugar acid can be lower as compared to the dosage, relative to mineral binder, of only phosphonate group carrying polymer while the same effects on slump flow, viscosity, and/or yield point of a mineral binder composition are obtained.

It has been found that the dosage of the at least one phosphonate group carrying polymer of general structure (I) or (II) can be reduced by 10 - 25 w% when additionally at least one polyalkoxylated amide or ester of sugar acid of general structure (III) or (IV) is used, while the same effects on slump flow, viscosity, and/or yield point of a mineral binder composition are obtained.

This is a particular advantage, because the phosphonate group carrying polymer of general structure (I) or (II) are known to lead to some retardation in the curing of the mineral binder, especially cement. This is not the case with polyalkoxylated amide or ester of sugar acid of general structure (III) or (IV). Therefore, by replacing some of the phosphonate group carrying polymer by polyalkoxylated amide or ester of sugar acid it is possible to arrive at essentially the same effects on slump flow, viscosity, and/or yield point of a mineral binder composition but with less retardation. In other words, it is possible to achieve the desired improvement of rheological properties, especially reduction of viscosity, of a mineral binder composition without significant changes in setting time and/or strength development. This decreases the need for additional accelerators to be added.

According to embodiments, in a method of the present invention, the effectiveness of a phosphonate group carrying polymer of general structure (I) is improved, wherein R¹ is methyl, R² is A-PO₃M₂, A is methylene, Q is ethylene, o is 1, n is 1, 2, 3, or 4, m is an integer between 1 and 100, and p is 1.

According to embodiments, in a method of the present invention, a polyalkoxylated amide of sugar acid of the general structure (III) is added, wherein in the general structure (III) X is NH, R⁴ is CH₃, R⁵ is CH₂-OH, r is 4, and s and t independently of one another are integers between 0 and 350, preferably between 0 and 180, more preferably between 0 and 70 with the provision that s + t is not zero.

According to embodiments, in a method of the present invention, a polyalkoxylated amide of sugar acid of the general structure (IV) is added, wherein in the general structure (IV) X is NH, R⁵ is CH₂-OH, R⁷ is CH₃, r is 4, and s and t independently of one another are integers between 0 and 350, preferably between 0 and 180, more preferably between 0 and 70 with the provision that s + t is not zero.

### Examples

### Production Examples

To prepare Polymer 1, 10 g of glucono-δ-lactone were added directly to 125 g of monomethoxypolyalkyleneoxide monoamine (Jeffamine M2070, Mw ca. 2000 g/mol, EO/PO molar ratio 32:10) preheated to 60 °C. The mixture was heated to 80 °C under a continuous flow of nitrogen gas until the full dissolution of the glucono-δ-lactone. The reaction mixture was stirred at this temperature for an additional hour. The resulting viscous product is Polymer 1 and was used without further dilution.

To prepare Polymer 2, 10 g of glucono-δ-lactone in water were added directly to 185 g of monomethoxypolyalkyleneoxide monoamine (Jeffamine M3085, Mw ca. 3000 g/mol, EO/PO molar ratio 58:7) preheated to 70 °C. The mixture was heated to 80 °C under a continuous flow of nitrogen gas until the full dissolution of the glucono-δ-lactone. The reaction mixture was stirred at this temperature for an additional hour. The resulting viscous product is Polymer 1 and was used without further dilution.

To prepare Polymer 3, 10 g of glucono-δ-lactone were directly added to 62 g of polyalkyleneoxide diamine (Jeffamine D-2003, Mw ca. 2000 g/mol, EO/PO molar ratio 36:7) preheated to 75 °C. The mixture was heated to 80 °C under a continuous flow of nitrogen gas until the full dissolution of the glucono-δ-lactone. The reaction mixture was stirred at this temperature for an additional hour. The resulting viscous product is Polymer 1 and was used without further dilution.

### Mortar Tests

Mortars were prepared by mixing 750 g of cement CEM 142.5 N, 148 g of limestone filler (Nekafill 15), 731 g of sand (0 - 1 mm), 1107 g of sand (1 - 4 mm), and 1154 g of sand (4 - 8 mm) with mixing water, to yield a water to cement weight ratio of 0.34 and the paste was mixed for 30 seconds on a Hobart mixer. The respective polymers were added in the dosages (in w% relative to cement) as indicated in below table 1 together with the mixing water. The mortar was allowed to rest for 90 seconds and finally mixed for 60 seconds at speed 2. The total wet mixing time was 3 minutes in each case.

Slump flow was tested according to standard DIN EN 12350-5:2019-09 after 5 minutes from the end of mixing. Results are shown in table 1 below.

Compressive strength (C.S.) was measured according to standard DIN EN 1015-11:2020-01 on prisms of 10 x 40 x 160 mm after the time indicated in below table 1.

**Table 1: Examples 1-1 to 1-3 (not inventive) and 1-4 to 1-6 (inventive)**

| **Example** | **1-1** | **1-2** | **1-3** | **1-4** | **1-5** | **1-6** |
|---|---|---|---|---|---|---|
| phosphonate group carrying polymer* | 0.3 | 0.45 | 0.6 | 0.5 | 0.3 | 0.24 |
| Polymer 1 | | | | 0.1 | 0.3 | 0.2 |
| Slump flow [mm] | 145 | 160 | 167 | 175 | 192 | 169 |
| C.S. 1d [MPa] | 12.6 | 9.1 | 3.2 | n.d. | n.d. | 12.2 |

| | | | | | | |
|---|---|---|---|---|---|---|
| *general structure (I) with R¹ = methyl, R² = A-PO₃M₂, A= methylene, Q = ethylene, o = 1, Alk is C₂H₄, and m is an average of 40 n.d.: not determined | | | | | | |

It can be seen from the results in table 1 that the use of increasing amount of the phosphonate group carrying polymer alone leads to an increase of slump flow but at the expense of strongly reduced early strength. The combined use of the phosphonate group carrying polymer and polyalkoxylated amide of sugar acid (Polymer 1) leads to generally increased slump flow. A comparison of examples 1-2 and 1-6 shows that at similar total dosage, the combined use of the phosphonate group carrying polymer and polyalkoxylated amide of sugar acid leads to improved slump flow together with significantly higher early strength. Therefore, the synergistic effects of phosphonate group carrying polymer and polyalkoxylated amide of sugar acid are shown.

### Paste tests

Cement pastes were prepared by mixing 100 g of CEM I 42.5 N with water to yield a weight ratio of water to cement of 0.35. The respective polymers were added in the dosages (in w% relative to cement) as indicated in below table 1 together with the mixing water. The pastes were mixed for 2 minutes with a Heidolph mixer and then immediately yield stress and viscosity were determined.

Bingham yield stress and viscosity were measured as described above after 5 min after mixing. Results are shown in table 2 below.

**Table 2: Examples 2-1 (not inventive) and 2-2 to 2-7 (inventive)**

| **Example** | **2-1** | **2-2** | **2-3** | **2-4** | **2-5** | **2-6** | **2-7** |
|---|---|---|---|---|---|---|---|
| phosphonate group carrying polymer* | 0.350 | 0.163 | 0.163 | 0.163 | 0.142 | 0.142 | 0.142 |
| Polymer 1 | | 0.133 | | | 0.117 | | |
| Polymer 2 | | | 0.133 | | | 0.117 | |
| Polymer 3 | | | | 0.133 | | | 0.117 |
| Yield stress [Pa] | 9.61 | 4.11 | 7.12 | 3.16 | 5.57 | 9.48 | 4.72 |
| Viscosity [Pas] | 0.24 | 0.22 | 0.23 | 0.2 | 0.24 | 0.24 | 0.22 |

| | | | | | | | |
|---|---|---|---|---|---|---|---|
| *general structure (I) with R¹ = methyl, R² = A-PO₃M₂, A= methylene, Q = ethylene, o = 1, Alk is C₂H₄, and m is an average of 40 | | | | | | | |

It can be seen from the result in table 2 that the combined use of phosphonate group carrying polymer and polyalkoxylated amide of sugar acid leads to lower yield stress and similar or lower viscosity as compared to the use of the phosphonate group carrying polymer alone. A low yield stress and low viscosity is obtained at a lower total dosage of the combination of phosphonate group carrying polymer and polyalkoxylated amide of sugar acid as compared to the dosage of the phosphonate group carrying polymer alone required to achieve similarly low yield stress and low viscosity. The effectiveness of the phosphonate group carrying polymer is improved. It is therefore possible to reduce the dosage of the phosphonate group carrying polymer and of the total admixture to achieve a desired yield stress and viscosity of the mineral binder composition. A particularly strong reduction in viscosity and yield stress is possible by the use of a polyalkoxylated amide of sugar acid according to general structure (IV) (Polymer 3).

## Claims

1. An admixture for mineral binder composition, said admixture comprising
(i) at least one phosphonate group carrying polymer of general structure (I) 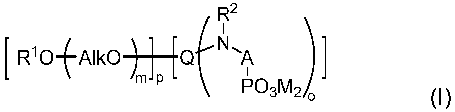 wherein in general structure (I)
R¹ is a hydrogen atom or a monovalent hydrocarbon group having from 1 - 18 carbon atoms and optionally one or more heteroatoms,
R² independently of one another is A-PO₃M₂, a monovalent hydrocarbon group having from 1 - 18 carbon atoms and optionally one or more heteroatoms, a group [R¹-O-(AlkO-)ₘ]ₚ-Q, or a group 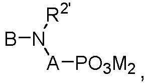
Q is an alkylene group having from 2 - 18 carbon atoms and optionally one or more heteroatoms,
A is an alkylene group having 1 - 5 carbon atoms,
B is an alkylene group having from 2 - 18 carbon atoms and optionally one or more heteroatoms,
R^{2'} having the same meaning as R²,
M independently of one another is H, an alkali metal, or an organic ammonium cation,
Alk independently form one another is CₙH₂ₙ where n is 1, 2, 3, or 4, m is an integer between 1 and 100,
o is an integer between 1 and 3,
p is an integer between 1 and 10,
or of general structure (II) 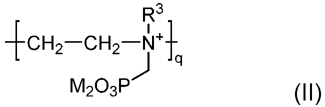 wherein in general structure (II)
R³ independently of one another are H, an alkyl group having 1 - 5 carbon atoms, or -O⁻ ,
M independently of one another is H, an alkali metal, or an organic ammonium cation,
q is 10 or more, and
(ii) at least one polyalkoxylated amide or ester of sugar acid of general structure (III) 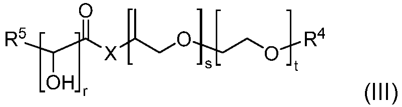 or of general structure (IV) 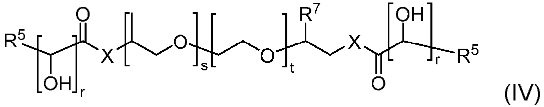 wherein in general structures (III) and (IV)
X is O or NH,
R⁴ is a hydrogen atom or a monovalent hydrocarbon group having from 1 - 18 carbon atoms
R⁵ is CH₂-OH, C(O)H, C(O)OH, or C(O)-R⁶, where R⁶ is 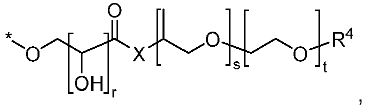
the * indicating the point of connection to the carbonyl C atom,
R⁷ is H or CH₃,
r is an integer between 1 and 4,
s and t independently of one another are integers between 0 and 350 with the provision that s + t is not zero.

2. The admixture as claimed in claim 1, **characterized in that** a phosphonate group carrying polymer of general structure (I) is comprised, wherein
R¹ is methyl, R² is A-PO₃M₂, A is methylene, Q is ethylene, o is 1, Alk is CₙH₂ₙ where n is 2 and/or 3, m is an integer between 30 and 50, and p is 1.

3. The admixture as claimed in any of claims 1 or 2, **characterized in that** at least one polyalkoxylated amide of sugar acid of general structure (III) is comprised, wherein in the general structure (III) X is NH, R⁴ is CH₃, R⁵ is CH₂-OH, r is 4, and s and t independently of one another are integers between 0 and 350, preferably between 0 and 180, more preferably between 0 and 70 with the provision that s + t is not zero.

4. The admixture as claimed in any of the claims 1 or 2, **characterized in that** at least one polyalkoxylated amide of sugar acid of general structure (IV) is comprised, wherein in the general structure (IV) X is NH, R⁵ is CH₂-OH, R⁷ is CH₃, r is 4, and s and t independently of one another are integers between 0 and 350, preferably between 0 and 180, more preferably between 0 and 70 with the provision that s + t is not zero.

5. The admixture as claimed in any of the previous claims, **characterized in that** a weight ratio of the phosphonate group carrying polymer to the polyalkoxylated amide or ester of sugar acid is between 20:1 to 1:20, preferably 10:1 to 1:10, more preferably 10:1 to 1:1, in particular 3:1.

6. The admixture as claimed in any of the previous claims, **characterized in that** it additionally comprises at least one of retarders, accelerators, air detraining agents, air entraining agents, shrinkage reducing admixtures, superplasticizers, thickening agents, foaming agents, defoamers, water retention agents, damp proofing agents, pumping aids, biocides, corrosion inhibitors, pigments, and water.

7. Use of an admixture as claimed in any of claims 1 - 6 to improve the rheological properties, in particular to reduce the viscosity, of a mineral binder composition.

8. A mineral binder composition comprising at least one mineral binder and comprising an admixture as claimed in any of claims 1 - 6.

9. The mineral binder composition as claimed in claim 8, **characterized in that** the phosphonate group carrying polymer of general structure (I) or (II) is comprised in an amount of 0.005 - 5 w%, preferably 0.01 - 2 w%, more preferably 0.1 - 1.2 w%, relative to the total dry weight of mineral binder.

10. The mineral binder composition as claimed in any of claims 8 or 9, **characterized in that** the polyalkoxylated amide or ester of sugar acid of general structure (III) or (IV) is comprised in an amount of 0.0001 - 5 w%, preferably 0.001 - 1 w%, more preferably 0.01 - 0.5 w%, relative to the total dry weight of mineral binder.

11. The mineral binder composition as claimed in any of claims 8 - 10, **characterized in that** the mineral binder is selected from cement, pozzolanic material, and/or latent hydraulic material.

12. A method to improve the effectiveness of a phosphonate group carrying polymer of general structure (I) 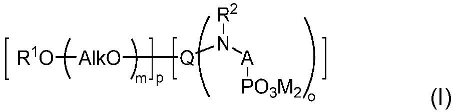 wherein in general structure (I)
R¹ is a hydrogen atom or a monovalent hydrocarbon group having from 1 - 18 carbon atoms and optionally one or more heteroatoms,
R² independently of one another is A-PO₃M₂, a monovalent hydrocarbon group having from 1 - 18 carbon atoms and optionally one or more heteroatoms, a group [R¹-O-(AlkO-)ₘ]ₚ-Q, or a group 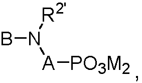
Q is an alkylene group having from 2 - 18 carbon atoms and optionally one or more heteroatoms,
A is an alkylene group having 1 - 5 carbon atoms,
B is an alkylene group having from 2 - 18 carbon atoms and optionally one or more heteroatoms,
R^{2'} having the same meaning as R²,
M independently of one another is H, an alkali metal, or an organic ammonium cation,
Alk independently of one another is CₙH₂ₙ where n is 1, 2, 3, or 4,
m is an integer between 1 and 100,
o is an integer between 1 and 3,
p is an integer between 1 and 10,
or of general structure (II) 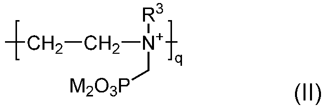 wherein in general structure (II)
R³ independently of one another are H, an alkyl group having 1 - 5 carbon atoms, or -O⁻ ,
M independently of one another is H, an alkali metal, or an organic ammonium cation,
q is 10 or more,
in a mineral binder composition, said method comprising a step of adding a polyalkoxylated amide or ester of sugar acid of general structure (III) 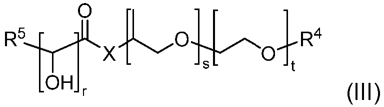 or of general structure (IV) 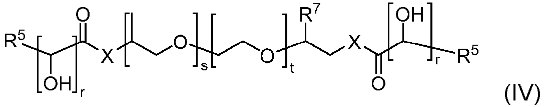 wherein in general structures (III) and (IV)
X is O or NH,
R⁴ is a hydrogen atom or a monovalent hydrocarbon group having from 1 - 18 carbon atoms
R⁵ is CH₂-OH, C(O)H, C(O)OH, or C(O)-R⁶, where R⁶ is 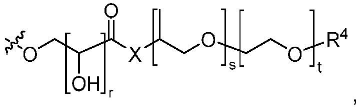
the * indicating the point of connection to the carbonyl C atom,
R⁷ is H or CH₃,
r is an integer between 1 and 4,
s and t independently of one another are integers between 0 and 350 with the provision that s + t is not zero,
to the mineral binder composition together with or separate from the phosphonate group carrying polymer.

13. The method as claimed in claim 12, **characterized in that** a phosphonate group carrying polymer of general structure (I) is present, wherein
R¹ is methyl, R² is A-PO₃M₂, A is methylene, Q is ethylene, o is 1, Alk is CₙH₂ₙ where n is 1, 2, 3, or 4, m is an integer between 30 and 50, and p is 1.

14. The method as claimed in any of the claims 12 or 13, **characterized in that** a polyalkoxylated amide of sugar acid of the general structure (III) is added, wherein in the general structure (III) X is NH, R⁴ is CH3, R⁵ is CH₂-OH, r is 4, and s and t independently of one another are integers between 0 and 350, preferably between 0 and 180, more preferably between 0 and 70 with the provision that s + t is not zero.

15. The method as claimed in any of the claims 12 or 13, **characterized in that** a polyalkoxylated amide of sugar acid of the general structure (IV) is added, wherein in the general structure (IV) X is NH, R⁵ is CH₂-OH, R⁷ is CH₃, r is 4, and s and t independently of one another are integers between 0 and 350, preferably between 0 and 180, more preferably between 0 and 70 with the provision that s + t is not zero.
